# FASCICULE DE BREVET EUROPEEN

(11) **EP 2 947 563 B1**
(45) Date de publication et mention de la délivrance du brevet: **21.10.2020**
(21) Numéro de dépôt: 15168292.9
(22) Date de dépôt: 20.05.2015
(51) Int. Cl.: G06F 9/30

(54) **PROCESSEUR À INSTRUCTIONS CONDITIONNELLES**
PROZESSOR MIT BEDINGTEN ANWEISUNGEN
CONDITIONAL INSTRUCTION PROCESSOR

(30) Priorité: 20.05.2014 FR 1454511
(43) Date de publication de la demande: 25.11.2015
(73) Titulaire: BULL SAS, 78340 Les Clayes sous Bois (FR)
(72) Inventeur: Chehaibar, Ghassan, 78280 Guyancourt (FR)
(74) Mandataire: Santarelli

(56) Documents cités:
- EP-A2- 1 267 257
- GB-A- 2 315 890
- GB-A- 2 352 536

## Description

La présente invention concerne le domaine des processeurs pour dispositifs informatiques. Elle concerne notamment les processeurs dédiés à l'implémentation de la recherche d'éléments dans des listes.

Certains types de dispositifs informatiques, tels que les cartes réseau supportant l'interface MPI (sigle de « Message Passing Interface » en anglais), nécessitent la mise en œuvre massive de recherche d'éléments dans des listes.

Il s'agit par exemple, de lister les messages attendus par un nœud d'un réseau de communication avec une indication de leurs lieux de stockage respectifs et de comparer tous les messages entrants du nœud à ceux de la liste. Ainsi, lorsqu'un message arrive, il peut être acheminé vers son lieu de stockage pour être traité.

Classiquement, chaque message entrant dispose d'une étiquette qui doit être comparée à l'étiquette des messages dans la liste. Les étiquettes des messages de la liste sont éventuellement masquées pour que la comparaison des étiquettes se fasse sur un nombre de bits réduit.

Lorsqu'un message arrive, son étiquette est comparée à celle du premier élément de la liste, puis le deuxième, puis le troisième et ainsi de suite, jusqu'à ce qu'une correspondance d'étiquette soit trouvée.

Dans ce cas, le message entrant est acheminé vers le lieu de stockage et l'élément correspondant de la liste est supprimé. La liste est ensuite mise à jour.

La liste des messages attendus est donc une liste dynamiquement modifiée avec des éléments pouvant être retirés, lorsqu'un message correspondant arrive ou pouvant être ajoutés lorsqu'un nouveau message est attendu.

La mise en œuvre de ce type de recherche requiert l'exécution d'algorithmes de parcours et de gestion de listes complexes. En outre, ces algorithmes sont généralement mis en œuvre avec un grand nombre d'options à gérer.

Ainsi, il est généralement prévu au sein des dispositifs informatiques, en particulier les interfaces de type MPI, un processeur dédié à ce type d'opérations. L'utilisation d'un processeur dédié permet de gérer la recherche d'élément d'une liste (ou « matching » en terminologie anglo-saxonne) de manière logicielle et non matérielle. Cela offre une plus grande flexibilité car le code informatique pilotant le processeur (ou « micro-code » ou encore « firmware » en terminologie anglo-saxonne) peut évoluer en fonction de modifications de la spécification de l'interface par exemple.

Afin d'obtenir de bonnes performances du processeur, il convient de réduire son temps d'exécution et donc ses cycles de fonctionnement. En effet, le temps d'exécution des processus dans le processeur impacte le débit des messages gérés par l'interface.

Par ailleurs, il convient de faciliter l'écriture des « firmwares » par les développeurs. En effet, celui-ci est écrit en langage assembleur et ne bénéficie donc pas des structures de contrôle de haut niveau offertes par d'autres types de langage. Une erreur d'écriture de code assembleur peut avoir des conséquences graves et directes sur le processeur, sans que cette erreur ait pu être contrôlée.

Aussi, il peut être souhaitable de garder une taille raisonnable pour les instructions machine exécutées par le processeur.

Le document Hemmert et al. « An architecture to perform NIC Based MPI Matching » divulgue un processeur basé sur des prédicats pour contrôler le flot d'instructions machine exécutées. Les instructions machine sont exécutées en fonction de valeurs stockées dans des registres de prédicat qui stockent des combinaisons logiques (de type ET et OU) de résultats de comparaisons (bit à bit). Les registres de prédicat représentent les conditions à remplir pour que les instructions soient exécutées.

Dans ce document, le contrôle de flot se fait par des instructions de branchement en fonction de la valeur d'un bit de registre de prédicat. On rappelle qu'un branchement consiste à ne pas exécuter une partie d'une suite séquentielle d'instructions en n'exécutant pas une instruction suivante du code mais en passant directement à une instruction précédente ou ultérieure dans le code. Le branchement peut donc se faire vers l'avant ou vers l'arrière dans le code informatique.

Pour extraire les options d'exécution des instructions, les comparaisons sont faites par une unité de comparaison ternaire (NALU) qui compare deux valeurs avec un masque de comparaison.

Cependant, ce type de processeur présente plusieurs inconvénients.

Par exemple, le nombre de cycles nécessaires à l'exécution d'un code est élevé. Cela est dû en particulier à l'usage massif du branchement comme moyen de contrôle. Ce document annonce un nombre de deux cycles pour effectuer un branchement. Cependant, il s'agit là d'un processeur d'étude avec un accès à la mémoire en un seul cycle et sans code de correction d'erreur (de type ECC par exemple). Un tel processeur ne peut être utilisé de manière réaliste dans des applications industrielles. Dans les applications industrielles, un nombre de cinq cycles est généralement nécessaire pour exécuter un branchement.

En outre, le processeur présenté utilise une unité de calcul classique (ALU) et une unité de calcul ternaire (TALU). Il n'est donc pas possible de faire du calcul parallèle ce qui n'optimise pas la taille des instructions qui est pourtant de 164 bits ce qui permet normalement l'exécution parallèle d'instructions.

Il existe donc un besoin pour améliorer les processeurs de l'art antérieur, en particulier les processeurs dédiés à la recherche de correspondance d'éléments dans des listes. EP1267257 décrit un processeur exécutant des instructions conditionnelles sur des registres de prédicat.

La présente invention s'inscrit dans ce cadre.

Un **premier aspect** de l'invention concerne un procédé de traitement d'instructions machine par un processeur comportant les étapes suivantes :
- de réception d'une instruction machine à exécuter, ladite instruction machine comportant l'identification d'au moins une première opération à exécuter et un préfixe conditionnel représentant une condition à vérifier pour exécuter ladite au moins une première opération,
- d'évaluation dudit préfixe, et
- d'exécution ou non de ladite au moins une première opération identifiée dans ladite instruction machine, selon que ladite condition est vérifiée ou non.

Un procédé selon le premier aspect permet un contrôle de l'exécution des instructions optimisé. Il permet notamment de réduire le recours aux branchements.

Un procédé selon le premier aspect permet des traitements accélérés en réduisant le nombre de cycles nécessaires à l'exécution d'instructions.

Par exemple, un procédé selon le premier aspect permet de réaliser des recherches de correspondance d'éléments en un nombre réduit de cycles dans un système informatique.

Selon des modes de réalisation, l'évaluation dudit préfixe comporte la vérification d'une valeur d'un registre de prédicat.

Ledit préfixe conditionnel peut comporter :
- une identification de ladite valeur dudit registre de prédicat, et
- une identification d'une deuxième opération à effectuer sur ladite valeur pour ladite vérification.

Par exemple, ladite deuxième opération est une opération logique.

Par exemple encore, ladite deuxième opération est une attente de réalisation de ladite valeur.

Ladite deuxième opération peut aussi être une opération vide, la condition étant ainsi toujours vérifiée.

Selon des modes de réalisation, ladite au moins une première opération est un branchement vers une autre instruction machine d'un code à exécuter par ledit processeur.

Par exemple, ledit branchement est conditionné par l'évaluation d'un vecteur de prédicats, comportant une pluralité de valeurs d'un ou plusieurs registres de prédicats.

Ledit vecteur de prédicat peut être évalué en partie.

Selon des modes de réalisation, ladite au moins une première opération représente un calcul de prédicat, ledit calcul comportant :
- la détermination d'un bit d'un registre de calcul,
- la comparaison dudit bit déterminé avec une valeur prédéterminée, et
- l'écriture d'un résultat de ladite comparaison dans un registre de prédicat.

Par exemple, ladite instruction machine comporte l'identification de deux premières opérations à exécuter en parallèle.

Par exemple encore, l'exécution des instructions machines par le processeur est gérée par un module de chaîne de traitement et dans lequel lesdites instructions machine sont exécutées à l'étage exécution de ladite chaîne de traitement.

Chaque instruction machine peut être exécutée en un cycle de processeur.

Lesdites instructions machines peuvent être représentées par des mots code dont le format est prédéfini.

Un **deuxième aspect** de l'invention concerne un processeur configuré pour la mise en œuvre d'un procédé selon le premier aspect de l'invention.

Par exemple, un tel processeur comporte :
- une mémoire configurée pour stocker au moins une instruction machine à exécuter, ladite instruction machine comportant l'identification d'au moins une première opération à exécuter et un préfixe conditionnel représentant une condition à vérifier pour exécuter ladite au moins une première opération,
- un module de gestion configuré pour évaluer ledit préfixe et faire exécuter ou non ladite au moins une première opération identifiée dans ladite instruction machine, selon que ladite condition est vérifiée ou non, et
- une unité de traitement configurée pour l'exécution de ladite au moins une première opération identifiée.

Un **troisième aspect** de l'invention concerne un dispositif de recherche de correspondance d'élément dans une liste, comportant un processeur selon le deuxième aspect. Par exemple, ce dispositif est une unité de traitement de liste associative (ALPU sigle de « Associative List Processing Unit » en anglais).

D'autres caractéristiques et avantages de l'invention apparaîtront à la lecture de la présente description détaillée qui suit, à titre d'exemple non limitatif, et des figures annexées parmi lesquelles :
- la **figure 1A** illustre schématiquement un processeur selon des modes de réalisation,
- la **figure 1B** illustre les étapes de traitement d'un flot d'instructions selon des modes de réalisation,
- la **figure 2** illustre un branchement,
- les **figures 3A-3B** et **4A-4G** illustrent des instructions selon des modes de réalisation.

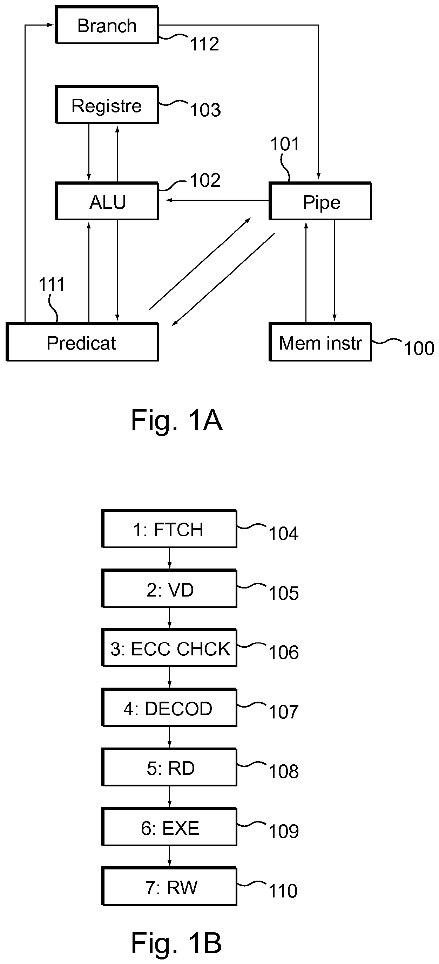

Dans ce qui suit, une architecture de processeur selon des modes de réalisation est décrite. Une illustration très simplifiée d'un processeur est donnée en **figure 1A****.** Cette illustration vise à présenter les éléments discutés dans la suite de la description. La personne du métier est à même de comprendre que d'autres éléments sont utiles au fonctionnement complet du processeur. Ces éléments ne sont pas présentés dans le seul souci de la concision de la description.

Une mémoire 100 stocke les instructions machine à exécuter par le processeur.

La gestion de l'exécution de ces instructions est faite par un module de chaîne de traitement 101 (ou « pipeline » en terminologie anglo-saxonne).

L'exécution des opérations nécessaires à l'exécution des instructions est quant à elle effectuée par une unité de traitement 102 de type ALU (sigle de « arithmetic and logic unit » en terminologie anglo-saxonne).

Les données utiles à l'exécution des instructions sont stockées dans un ou plusieurs registres 103 accessibles en lecture et/ou en écriture par l'unité de traitement.

Le module de chaîne de traitement gère le flot d'instructions selon sept « étages » (ou étapes) d'exécution illustrées par la **figure 1B****:**
1) l'envoi 104 de l'adresse de l'instruction à exécuter vers la mémoire d'instructions,
2) un cycle d'horloge vide 105 pour tenir compte de la latence de lecture de l'instruction en mémoire,
3) la vérification 106 de l'instruction reçue, par exemple par vérification de bits dédiés d'un code de correction d'erreur (ECC),
4) le décodage 107 de l'instruction,
5) la lecture 108 des opérandes de l'instruction,
6) l'exécution 109 des opérations, et
7) l'écriture 110 des résultats de l'instruction dans un ou plusieurs registres.

De retour à la figure 1A, pour contrôler l'exécution des instructions par le module de chaîne de traitement, le processeur comporte un ou plusieurs registres de prédicat 111. En fonction de valeurs de bits dans ce registre certaines instructions peuvent être exécutées ou non.

Par ailleurs, le branchement sur les instructions du code exécuté par le processeur est généré par une unité de branchement dédiée 112.

Dans l'art antérieur, le branchement est la technique couramment utilisée pour contrôler le flux d'exécution des instructions. Cependant, le branchement est très consommateur de cycle de processeur. Il est donc proposé ici de réduire son utilisation.

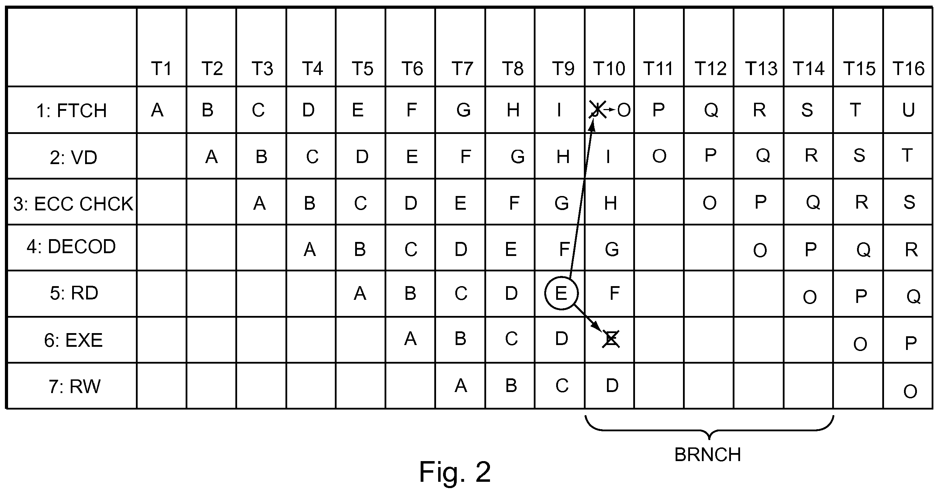

Le branchement est tout d'abord décrit dans ce qui suit en référence à la **figure 2****.**

Il est supposé qu'un ensemble d'instructions notées de A à Z d'un code sont à exécuter séquentiellement. En d'autres termes, le code comporte l'instruction A, puis l'instruction B, puis l'instruction C et ainsi de suite. Il est également supposé que durant l'exécution du code, certaines instructions soient à exécuter sous condition.

Par exemple, si une condition COND est remplie, l'instruction E qui suit directement l'instruction D n'est pas exécutée, mais c'est l'instruction O qui doit l'être. On « saute » donc l'exécution des instructions D à N. Autrement dit, le code est « branché » à l'instruction O.

Le branchement implique donc de ne pas faire passer l'instruction E à l'étage 6 d'exécution (étape 109 de la figure 1B). Cependant, il implique aussi de vider toutes les instructions suivant l'instruction E de la chaîne de traitement pour y faire entrer l'instruction O.

Dans la figure 2, le contenu de chaque étage de la chaîne de traitement est représenté pour différents cycles T1 à T16.

Au premier cycle T1, l'instruction A est demandée par le module de chaîne de traitement. Au cycle T2, il est attendu la réponse de la part du module de mémoire d'instruction. Ainsi, l'instruction A passe de l'étage 1 à l'étage 2, ce qui libère l'étage 1. Au cycle T2 l'instruction B peut donc être demandée au module de mémoire d'instruction.

Au cycle T3, l'instruction A est reçue et passe donc à l'étage 3 pour vérification. L'instruction B reste quant à elle en attente à l'étage 2 ce qui libère l'étage 1 pour l'instruction C.

Au fur et à mesure des cycles, les instructions font leur entrée dans le module de chaine de traitement et passent successivement les étages.

Au cycle T7, la chaîne de traitement est entièrement remplie. Au cycle T8, l'instruction A sort de la chaîne.

Au cycle T9 le branchement est demandé, par exemple suite à la vérification d'une condition par le module de branchement 112 dans le registre de prédicat 111. Ainsi, par exemple, l'instruction E ne doit pas être exécutée mais le code doit se poursuivre à partir de l'instruction O.

L'instruction E n'est donc pas passée à l'étage 6, elle est remplacée par une instruction vide, généralement désignée « NOP » lors du cycle T10. Par ailleurs, les instructions I, H, G et F qui devaient passer aux étages 2, 3, 4 et 5 sont vidées. L'instruction J qui devait faire son entrée à l'étage 1 au cycle T10 est remplacée par l'instruction O (au lieu de demander l'instruction J, le module de chaîne de traitement demande l'instruction O).

A partir de ce cycle, la succession des instructions dans les étages du module de chaîne de traitement poursuit son cours normalement.

On voit ainsi que c'est seulement au cycle T15 que l'instruction O parvient à l'étage 6 d'exécution. Ainsi, le branchement du code a nécessité 5 cycles.

On comprend ainsi que le branchement est consommateur en cycles de processeur et en temps d'exécution. C'est pour cette raison que, selon des modes de réalisation, on souhaite les éviter.

Il est donc proposé une nouvelle structure de contrôle du flot d'exécution des instructions, moins dépendant des branchements.

Les modes de réalisation n'excluent cependant pas l'utilisation des branchements.

Il est proposé de remplacer les branchements pour tester des conditions d'exécution d'instruction par des préfixes conditionnels dans les instructions du processeur.

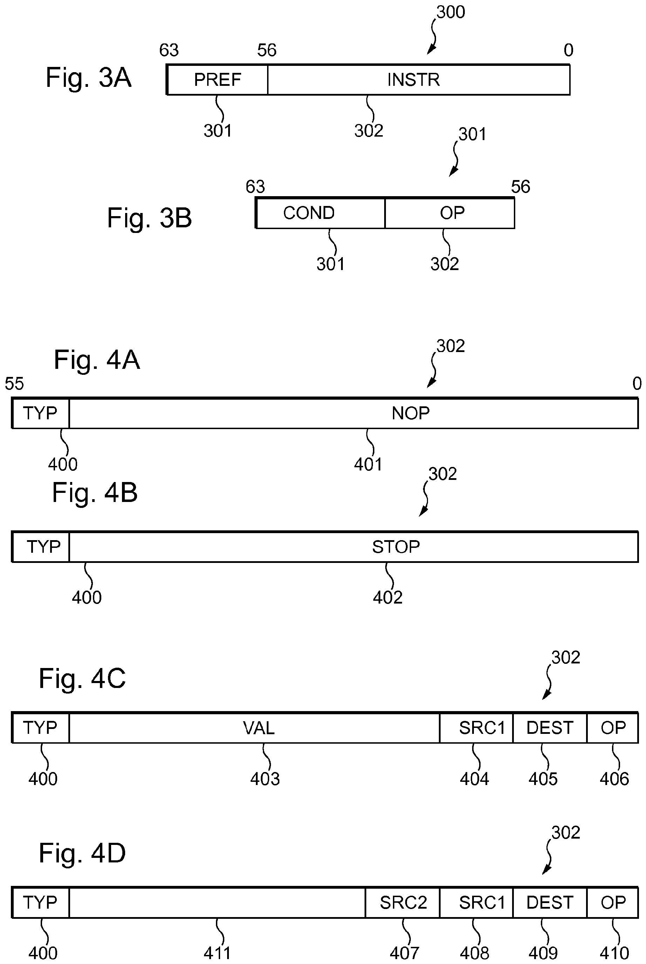

Ainsi, un nouveau format d'instruction est proposé, comme schématisé par la **figure 3A**. Les instructions 300 selon les modes de réalisation comportent deux parties : une première partie 301 dite « préfixe » comporte la condition à vérifier pour exécuter ou non la ou les opérations contenues dans la partie 302. Par exemple, les instructions sont codées sur 64 bits et un byte (8bits) est utilisé pour coder le préfixe.

Plusieurs types de préfixe peuvent être envisagés. Ainsi, le préfixe peut comporter deux sous- parties, comme illustré par la **figure 3B** : une sous-partie 302 identifiant le préfixe (par exemple codée sur deux bits de 0 à 3) et une sous-partie 303 contenant la condition à vérifier.

Les préfixes sont évalués à l'étage de lecture des opérandes. En fonction du résultat obtenu, la ou les opérations contenues dans la partie 302 sont exécutées.

Plusieurs types de préfixes peuvent être envisagés.

Par exemple, le code « 0 » peut identifier une condition vide. Dans ce cas, la ou les opérations contenues dans la partie 302 sont exécutées sans condition. Dans un langage assembleur, on peut écrire directement l'instruction. L'absence de condition précédant l'instruction est alors équivalente à une condition vide.

Le code « 1 » peut par exemple identifier une condition d'attente. Dans ce cas, la ou les opérations contenues dans la partie 302 ne sont exécutées qu'une fois la condition contenue dans la partie 303 remplie. Ce préfixe est donc équivalent à un branchement sur une adresse d'instruction courante. Ce préfixe peut être identifié par « wait_for » dans un langage assembleur.

Par exemple encore, le code « 2 » peut identifier la vérification de la réalisation d'une condition pour exécuter une ou plusieurs opérations contenues dans la partie 302 ou ne pas exécuter d'opération. Ainsi, si la condition 303 est vraie, la ou les opérations sont exécutées, sinon la condition est fausse et aucune opération n'est exécutée (l'instruction est remplacée par une instruction vide, généralement désignée « NOP »). Ce préfixe peut être désigné par « do_if() » dans un langage assembleur.

Le code « 3 » peut identifier la vérification de la non réalisation d'une condition pour exécuter une ou plusieurs opérations contenues dans la partie 302 ou ne pas exécuter d'opération. Ainsi, si la condition 303 est fausse, la ou les instructions sont exécutées, sinon aucune opération n'est exécutée (elles sont remplacées par une instruction vide, généralement désignée « NOP »). Ce préfixe peut être désigné par « do_if_not() » dans un langage assembleur.

La condition de la partie 303 peut être représentée par une adresse d'un ou plusieurs bits d'un registre de prédicat ou d'un registre stockant le résultat d'une comparaison d'un bit de registre de prédicat avec une valeur fixe.

Les figures 4A à 4G illustrent des exemples d'instructions pouvant être contenues dans la partie 302 de la structure illustrée par la figure 3A.

Chaque instruction est identifiée par un code d'instruction dans un champ 400.

La **figure 4A** illustre une instruction vide « NOP ». S'agissant d'une instruction vide, une fois identifiée par le champ 400, la partie restante 401 ne contient pas d'information particulière. Elle n'est donc pas utilisée.

La **figure 4B** illustre une instruction d'arrêt « STOP». Elle indique la fin d'un programme. Une fois identifiée par le champ 400, la partie restante 402 ne contient pas d'information particulière. Elle n'est donc pas utilisée.

La **figure 4C** illustre une instruction à opérande à valeur immédiate. Il s'agit d'une instruction pour laquelle un des opérandes n'est pas représenté par l'adresse mémoire qui les stockent mais plutôt directement par la valeur elle-même, par exemple codée sur 4 bytes d'un champ 403. L'instruction comporte par ailleurs un champ 404 représentant l'adresse mémoire du deuxième opérande, un champ 405 représentant l'adresse mémoire à laquelle stocker le résultat de l'instruction et un champ 406 contenant le code de l'opération à exécuter par l'unité de traitement ALU sur les deux opérandes.

Le codage direct d'un opérande nécessitant beaucoup de place, l'instruction de la figure 4C ne permet pas l'exécution parallèle de plusieurs opérations.

La **figure 4D** illustre une instruction à opération unique. Il s'agit d'une instruction qui ne va commander qu'une seule opération par l'unité de traitement ALU. Ici les deux opérandes sont représentés par les adresses mémoire qui les stockent. L'instruction comporte ainsi, un champ 407 représentant l'adresse mémoire du deuxième opérande, un champ 408 représentant l'adresse mémoire du premier opérande, un champ 409 représentant l'adresse mémoire à laquelle stocker le résultat de l'instruction et un champ 410 contenant le code de l'opération à exécuter par l'unité de traitement ALU sur les deux opérandes. Le champ 411 est quant à lui inutilisé.

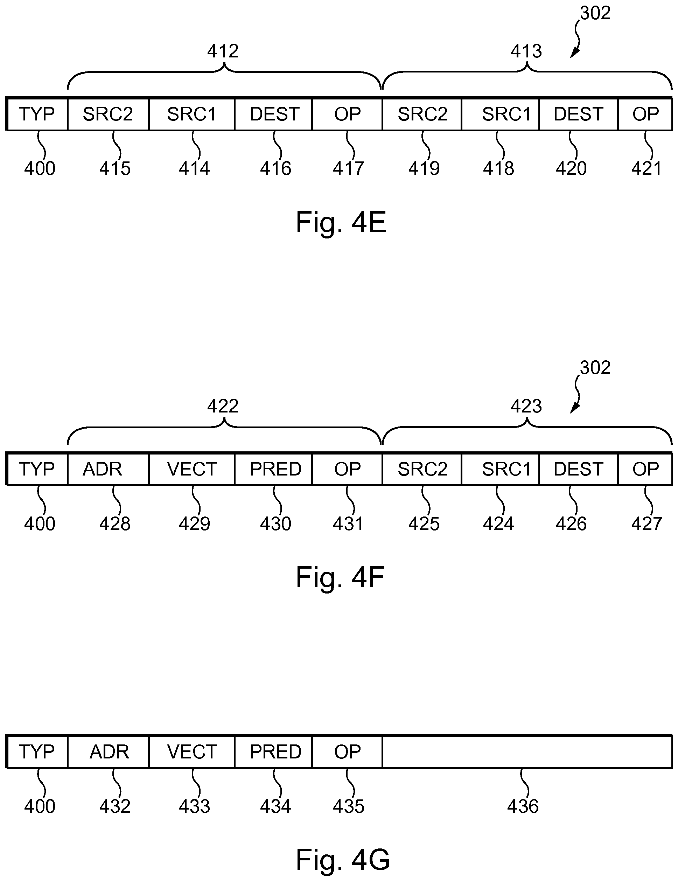

La **figure 4E** illustre une instruction à deux opérations. Il s'agit d'une instruction qui va commander l'exécution de deux opérations par l'unité de traitement ALU. Chaque opération est représentée par un champ 412 et 413. Dans le champ 412 (resp. 413), un champ 414 (resp. 418) représente l'adresse mémoire du deuxième opérande, un champ 415 (resp. 419) représente l'adresse mémoire du premier opérande, un champ 416 (resp. 420) représente l'adresse mémoire à laquelle stocker le résultat de l'instruction et un champ 417 (resp. 421) contient le code de l'opération à exécuter par l'unité de traitement ALU sur les deux opérandes. Il est possible d'exécuter deux opérations en parallèle car la taille de l'instruction 300 le permet.

La **figure 4F** illustre une instruction avec un branchement et une opération. Il s'agit d'une instruction qui va commander l'exécution d'un branchement par le module de chaîne de traitement et d'une opération par l'unité de traitement ALU. Le branchement est représenté par un champ 422 et l'opération par un champ 423.

Dans le champ 423, un champ 424 représente l'adresse mémoire du deuxième opérande, un champ 425 représente l'adresse mémoire du premier opérande, un champ 426 représente l'adresse mémoire à laquelle stocker le résultat de l'instruction et un champ 427 contient le code de l'opération à exécuter par l'unité de traitement ALU sur les deux opérandes.

Dans le champ 422, un champ 428 représente l'adresse mémoire de l'instruction vers laquelle le branchement pointe (le « saut » se fait à cette adresse), un champ 429 représente le vecteur de prédicats du registre de prédicat à vérifier (selon des modes de réalisation, on souhaite pouvoir vérifier plusieurs prédicats en une seule opération, ainsi on parle de vecteur de prédicats comme décrit dans la suite), un champ 430 comporte les valeurs cibles pour le vecteur de prédicat (contenant les valeurs pour lesquelles on considère que la condition du branchement est remplie) et un champ 431 contient le code représentant le branchement.

Il est possible d'exécuter un branchement et une opération en parallèle car la taille de l'instruction 300 le permet.

La **figure 4G** illustre une instruction à branchement unique. Il s'agit d'une instruction qui ne va commander qu'un branchement par le module de chaîne de traitement.

Un champ 432 représente l'adresse mémoire de l'instruction vers laquelle le branchement pointe (le « saut » se fait à cette adresse), un champ 433 représente le vecteur de prédicats du registre de prédicat à vérifier (selon des modes de réalisation, on souhaite pouvoir vérifier plusieurs prédicats en une seule opération, ainsi on parle de vecteur de prédicats comme décrit dans la suite), un champ 434 comporte les valeurs cibles pour le vecteur de prédicat (contenant les valeurs pour lesquelles on considère que la condition du branchement est remplie) et un champ 435 contient le code représentant le branchement. Le champ 436 est quant à lui inutilisé.

D'autres types d'instructions sont envisageables. Par exemple, il est possible de prévoir des instructions comportant des opérations de type composé (« *compound instructions »* en terminologie anglo-saxonne) permettant par exemple de réaliser des combinaisons d'opérations élémentaires de l'unité de traitement ALU. On peut aussi prévoir de combiner les opérations composées avec une opération classique, avec un branchement ou lancer deux opérations composée sen parallèle dans la même instruction.

L'utilisation d'un préfixe conditionnel comme décrit ci-dessus permet de gagner en cycles de processeur. L'exemple très simplifié ci-dessous permet de le comprendre. On rappelle qu'un branchement effectué (condition remplie) consomme cinq cycles alors qu'un branchement non effectué (condition non remplie) ne consomme qu'un cycle.

Prenons le code suivant, mettant en œuvre un branchement :

```
CODE_A//
1 : op0
// Il s'agit de l'exécution d'une opération op0.
2 : branch_if_not(p0) L0
// Il s'agit de brancher le code à la ligne L0 si le prédicat p0 est faux.
3 : op1
// Il s'agit de l'exécution d'une opération op1. Cette ligne est exécutée lorsque
p0 est vrai.
4 : branch L1
// Il s'agit d'un branchement inconditionnel à la ligne L1 car la ligne suivante est
LO qu'il ne faut pas exécuter si p0 est vrai.
5 : L0 : op2
// Il s'agit de l'exécution d'une opération op2.
6 : L1 : op3
// Il s'agit de l'exécution d'une opération op3.
```

Le code ci-dessus consiste donc à exécuter op0, puis selon que p0 est faux ou vrai :
- op2 puis op3 (p0 faux), ou
- op1 puis op3 (p0 vrai).

En termes de cycles, dans le cas p0 = faux on consomme donc 8 cycles:
- un cycle pour op0,
- cinq cycles pour le branchement effectué à la ligne 2,
- un cycle pour op2,
- un cycle pour op3.

En termes de cycles, dans le cas p0 = vrai on consomme donc 9 cycles:
- un cycle pour op0,
- un cycle pour le branchement non effectué à la ligne 2,
- un cycle pour op1,
- cinq cycles pour le branchement effectué à la ligne 4,
- un cycle pour op3.

Prenons maintenant le code suivant, pour exécuter le même programme, mais avec des instructions conditionnelles avec un préfixe comme discuté ci-dessus :

```
CODE_B//
1 : op0
// Il s'agit de l'exécution de l'opération op0.
2 : do_if_(p0), op1
// Il s'agit d'exécuter une opération op1 à la condition que p0 soit vrai. Dans
l'exemple de la figure 3A, le champ 301 comporterait l'adresse du prédicat p0 et
le code de l'opération IF de l'unité de traitement ALU. Le champ 302
comporterait la représentation de l'opération op1. On pourrait aussi utiliser les
modèles des figures 4D ou 4C si le processeur peut mettre en œuvre des
instructions larges avec des opérations en parallèle.
3 : do_if_not(p0), op2
// Il s'agit d'exécuter l'opération op1 à la condition que p0 soit faux
4 : op3
// Il s'agit de l'exécution de l'opération op3.
```

On peut déjà remarquer que l'écriture du code est simplifiée. Ce code de comporte plus que quatre lignes contre six précédemment. En outre il n'utilise pas de branchement.

En termes de cycles, dans le cas p0 = faux on consomme donc 4 cycles:
- un cycle pour op0,
- un cycle pour l'instruction conditionnelle de la ligne 2,
- un cycle pour l'instruction conditionnelle de la ligne 3,
- un cycle pour op3.

En termes de cycles, dans le cas p0 = vrai on consomme aussi 4 cycles.

Avec un processeur selon l'invention on exécute donc le même programme beaucoup plus rapidement.

Selon des modes de réalisation, il est possible d'accélérer encore plus l'exécution des programmes.

Pour cela, on introduit une opération de comparaison bit à bit permettant de tester un bit d'un registre pour écrire le résultat dans un registre de prédicat.

En effet, ce type de comparaison étant beaucoup mis en œuvre pour obtenir la valeur de la condition à tester (p0 dans l'exemple ci-dessus), il est avantageux de mettre une opération dédiée à la disposition du processeur.

Une telle opération peut s'écrire : cmp_bit_1_to_reg2[28], p0. Cette opération compare le bit de position 28 du registre reg2 à la valeur « 1 » et écrit le résultat (« 1 » pour vrai, « 0 » pour faux) dans le prédicat p0. Elle prend donc comme opérandes la valeur de la position du bit à tester (28), l'adresse du registre reg2 et l'adresse du prédicat p0.

Dans un processeur classique, il faudrait deux cycles pour arriver au même résultat :
1 : and reg2, 0x10000000, reg0
   // Il s'agit de faire une opération logique ET entre le contenu du registre reg2 avec la valeur 28 (en hexadécimal) et de stocker le résultat dans le registre reg0
2 : cmp_neq_to reg0, 0, p0
   // Cette instruction compare le contenu du registre reg0 à 0 et stocke le résultat dans le prédicat p0. Ainsi, si reg0 est différent de 0, p0 est vrai et si reg0 vaut 0, p0 est faux.

Dans l'exemple de code CODE_A donné ci-dessus, deux prédicats sont utilisés, p0 et p1. Il faudrait donc quatre cycles dans ce code pour obtenir leurs valeurs.

En utilisant une opération dédiée (de type cmp_bit_1_to_reg2[28], p0) on peut réduire ce nombre à 2.

Il est même possible de réduire ce nombre à un cycle si le processeur permet les instructions avec des opérations en parallèle.

Ainsi, au lieu d'écrire l'obtention des prédicats p0 et p1 comme ceci :
1 : and reg2, 0x10000000, reg0
   // On obtient la valeur du bit à la position 28 du registre reg2 et on la stocke dans reg0.
2 : and reg2, 0x1000000000000000, reg1
   // On obtient la valeur du bit à la position 56 du registre reg2 et on la stocke dans reg0.
3 : cmp_neq_to reg0, 0, p0
   // Cette instruction compare le contenu du registre reg0 à 0 et stocke le résultat dans le prédicat p0. Ainsi, si reg0 est différent de 0, p0 est vrai et si reg0 vaut 0, p0 est faux.
4 : cmp_eq_to reg1, 0, p1
   // Cette instruction compare le contenu du registre reg1 à 0 et stocke le résultat dans le prédicat p1. Ainsi, si reg1 vaut 0, p1 est vrai et si reg0 est différent de 0, p1 est faux.

Il est possible de l'écrire en une seule ligne
1 : cmp_bit_1_to_reg2[28], p0 || cmp_bit_0_to_reg2[56], p1
   // la double barre verticale signifie que les opérations sont exécutées en parallèle.

L'exécution parallèle d'opérations est possible ici car les valeurs directes de la position à tester dans le registre n'est pas manipulée (ce qui n'est pas le cas dans l'art antérieur). On rappelle que l'utilisation de valeurs directes interdit les opérations parallèles car elles demandent un nombre élevée de bits (comme expliqué en référence à la figure 4C).

Comme déjà évoqué ci-dessus, l'utilisation d'instructions conditionnelles préfixées n'empêche pas l'utilisation de branchements. Des modes de réalisation apportent cependant des améliorations aux branchements connus.

Toujours dans le but de gagner des cycles de processeur, il est proposé de réaliser les branchements sur des vecteurs de prédicats afin de pouvoir tester plusieurs conditions en même temps.

Une telle instruction de branchement peut s'écrire : branch_if_veq(abcd), L0. Il s'agit de faire le branchement à l'instruction indiquée à la ligne L0 si le vecteur de prédicats {p3, p2, p1, p0} est égal à {a, b, c, d}. Les paramètres a, b, c et d peuvent prendre les valeurs 0 ou 1 ou encore x s'il n'est pas nécessaire faire le test sur l'un des prédicats. Par exemple si la condition ne porte que sur les prédicats p0 et p1 on peut écrire une instruction su type branch_if_veq(xxcd), L0.

Dans ce qui suit, différentes caractéristiques décrites ci-dessus sont combinées dans un même code pour gagner en cycles de processeur. On commence par présenter un code tel qu'il serait écrit et exécuté selon l'art antérieur, puis on présente un code optimisé pour économiser des cycles tout en réalisant les mêmes opérations.

Considérons le code suivant, écrit avec des instructions selon l'art antérieur :

```
CODE_C //
1 : op1 || op2
// on exécute les opérations op1 et op2 en parallèle
2 : and reg2, 0x10000000, reg0
// On obtient la valeur du bit à la position 28 (en hexadécimal) du registre reg2
et on la stocke dans reg0.
3 : and reg2, 0x1000000000000000, reg1
// On obtient la valeur du bit à la position 56 du registre reg2 et on la stocke
dans reg0.
4 : cmp_neq_to reg0, 0, p0
// Cette instruction compare le contenu du registre reg0 à 0 et stocke le résultat
dans le prédicat p0. Ainsi, si reg0 est différent de 0, p0 est vrai et si reg0 vaut 0,
p0 est faux.
5 : cmp_eq_to reg1, 0, p1
// Cette instruction compare le contenu du registre reg1 à 0 et stocke le résultat
dans le prédicat p1. Ainsi, si reg1 vaut 0, p1 est vrai et si reg1 est différent de 0,
p1 est faux.
6 : op3 || op4
// On exécute les opérations op3 et op4 en parallèle
7 : branch_if_not(p0) L0
// On branche le code à la ligne L0 si le prédicat p0 est faux.
8 : op5
// On exécute l'opération op5. Cette ligne est exécutée lorsque p0 est vrai.
9 : branch L1
// Il s'agit d'un branchement inconditionnel à la ligne L1 car la ligne suivante est
LO qu'il ne faut pas exécuter si p0 est vrai
10 : L0 : op6
// On exécute une opération op6
11 : L1 : op7
// On exécute une opération op7
12 : branch_if_not(p1) L2
// On branche le code à la ligne L2 si le prédicat p1 est faux.
13 : op8
// On exécute l'opération op8. Cette ligne est exécutée lorsque p1 est vrai.
14 : branch L3
// Il s'agit d'un branchement inconditionnel à la ligne L3 car la ligne suivante est
L2 qu'il ne faut pas exécuter si p1 est vrai
15 : L2 : op9
// On exécute une opération op9
16 : L3 : op10
// On exécute une opération op10
17 : or, p0, p1, p2
// On calcule le prédicat p2 par un OU logique entre p0 et p1
18 : branch_if_not(p2) L4
// On branche le code à la ligne L4 si le prédicat p2 est faux.
19 : op11
// On exécute l'opération op11. Cette ligne est exécutée lorsque p2 est vrai.
20 : stop
// Fin du programme, sauf s'il est branché sur L4
21 : L4 : op12
// On exécute une opération op12
```

Le code CODE_C comporte donc le calcul de trois prédicats p0, p1 et p2 ainsi que trois branchements conditionnels. Il comporte par ailleurs des exécutions d'opération simples et des exécutions parallèles (marquées par le signe ||).

En rappelant qu'un branchement conditionnel effectué consomme cinq cycles et qu'un branchement non effectué (car sa condition n'est pas remplie) ne consomme qu'un cycle, on peut déterminer que pour le cas p0 = vrai et p1 = faux (et inversement), ce code s'exécute en 25 cycles (on considère aussi que le stop ne consomme qu'un cycle). Pour p0 = p1 = vrai ou faux, ce code s'exécute en 24 cycles.

Voici l'écriture de ce code en utilisant des instructions conditionnelles préfixées et les instructions de comparaison et de branchement évoquées dans la description ci-dessus :

```
CODE D //
1 : op1 || op2
// On exécute les opérations op1 et op2 en parallèle
2 : cmp_bit_1_to_reg2[28], p0 || cmp_bit_0_to_reg2[56], p1
// Les lignes 2, 3, 4 et 5 du code CODE_C sont ici condensées en une seule
ligne et instruction (avec deux opérations parallèles).
3 : op3 || op4
// On exécute les opérations op3 et op4 en parallèle.
4 : do_if_(p0), op5
// On exécute op5 si p0 est vrai.
5 : do_if_not(p0), op6
// On execute op6 si p0 est faux.
6 : op7
// On exécute l'opération op7.
7 : do_if_(p1), op8
// On exécute op8 si p1 est vrai.
8 : do_if_not(p1), op9
// On exécute op9 si p1 est faux.
6 : op10
// On exécute l'opération op10.
7 : branch_if_veq(xx00) LAB0
// On branche le code à la ligne LABO si les prédicats p1 et p0 sont faux. On
note que cette manière de procéder évite de réaliser le OR de la ligne 17 du
code CODE_C.
9 : op11
// On exécute l'opération op11. Cette ligne est exécutée lorsque p1 ou p0 est
vrai.
10 : stop
// Fin du programme, sauf s'il est branché sur LAB0
11 : LAB0 : op12
// On exécute une opération op12.
```

On note que le code est ici plus compact, il ne compte que 11 lignes d'instructions contre 21 pour le code C.

Pour le pire cas (p1 = p0 = faux), où le branchement est effectué, le code CODE_D s'exécute en 15 cycles ce qui est bien moins que les 24 cycles du meilleur cas pour le code CODE_C.

La présente invention a été décrite et illustrée dans la présente description détaillée en référence aux figures jointes. Toutefois la présente invention ne se limite pas aux formes de réalisation présentées. D'autres variantes et modes de réalisation peuvent être déduits et mis en œuvre par la personne du métier à la lecture de la présente description et des figures annexées.

Dans les revendications, le terme "comporter" n'exclut pas d'autres éléments ou d'autres étapes. L'article indéfini « un » n'exclut pas le pluriel. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

## Revendications

1. Procédé de traitement d'instructions machine par un processeur comportant les étapes suivantes :
- de réception (104, 105) d'une instruction machine (300) à exécuter, ladite instruction machine comportant l'identification d'au moins une première opération (302) à exécuter et un préfixe conditionnel (301) représentant une condition à vérifier pour exécuter ladite au moins une première opération,
- d'évaluation (108) dudit préfixe, et
- d'exécution ou non (109) de ladite au moins une première opération identifiée dans ladite instruction machine, selon que ladite condition est vérifiée ou non;
dans lequel l'évaluation dudit préfixe comporte la vérification d'une valeur d'un registre de prédicat,
ledit préfixe conditionnel comportant :
- une identification de ladite valeur dudit registre de prédicat, et
- une identification d'une deuxième opération à effectuer sur ladite valeur pour ladite vérification, et
dans lequel ladite deuxième opération est une attente de réalisation de ladite valeur.

2. Procédé selon l'une quelconque des revendications précédentes, dans lequel, ladite au moins une première opération est un branchement vers une autre instruction machine d'un code à exécuter par ledit processeur.

3. Procédé selon la revendication 2, dans lequel ledit branchement est conditionné par l'évaluation d'un vecteur de prédicats, comportant une pluralité de valeurs d'un ou plusieurs registres de prédicats.

4. Procédé selon la revendication 3, dans lequel ledit vecteur de prédicat est évalué en partie.

5. Procédé selon l'une quelconque des revendications précédentes, dans lequel ladite au moins une première opération représente un calcul de prédicat, ledit calcul comportant :
- la détermination d'un bit d'un registre de calcul,
- la comparaison dudit bit déterminé avec une valeur prédéterminée, et
- l'écriture d'un résultat de ladite comparaison dans un registre de prédicat.

6. Procédé selon l'une quelconque des revendications précédentes, dans lequel ladite instruction machine comporte l'identification de deux premières opérations à exécuter en parallèle.

7. Procédé selon l'une quelconque des revendications précédentes, dans lequel l'exécution des instructions machine par le processeur est gérée par un module de chaîne de traitement et dans lequel lesdites instructions machine sont exécutées à l'étage exécution de ladite chaîne de traitement.

8. Procédé selon la revendication 7, dans lequel chaque instruction machine est exécutée en un cycle de processeur.

9. Procédé selon l'une quelconque des revendications précédentes, dans lequel lesdites instructions machine sont représentées par des mots code dont le format est prédéfini.

10. Processeur comportant :
- une mémoire (100) configurée pour stocker au moins une instruction machine à exécuter, ladite instruction machine comportant l'identification d'au moins une première opération à exécuter et un préfixe conditionnel représentant une condition à vérifier pour exécuter ladite au moins une première opération,
- un module (101) de gestion configuré pour évaluer ledit préfixe et faire exécuter ou non ladite au moins une première opération identifiée dans ladite instruction machine, selon que ladite condition est vérifiée ou non, et
- une unité de traitement (102) configurée pour l'exécution de ladite au moins une première opération identifiée;
dans lequel le module (101) de gestion est configuré pour vérifier une valeur d'un registre de prédicat,
ledit préfixe conditionnel comportant :
- une identification de ladite valeur dudit registre de prédicat, et
- une identification d'une deuxième opération à effectuer sur ladite valeur pour ladite vérification, et
dans lequel ladite deuxième opération est une attente de réalisation de ladite valeur.

## Patentansprüche

1. Verfahren zur Maschinenanweisungsverarbeitung durch einen Prozessor, die folgenden Schritte umfassend:
- des Empfangens (104, 105) einer auszuführenden Maschinenanweisung (300), wobei die Maschinenanweisung die Identifikation mindestens eines ersten auszuführenden Vorgangs (302) und ein Bedingungspräfix (301) umfasst, das eine Bedingung darstellt, die zum Ausführen des mindestens einen ersten Vorgangs zu verifizieren ist,
- des Auswertens (108) des Präfixes, und
- des Ausführens, oder auch nicht, des mindestens einen ersten Vorgangs, der in der Maschinenanweisung ausgewiesen ist, je nachdem, ob die Bedingung verifiziert wird oder nicht;
wobei die Auswertung des Präfixes die Verifizierung eines Werts eines Prädikatsregisters umfasst,
wobei das Bedingungspräfix umfasst:
- eine Ermittlung des Werts des Prädikatsregisters, und
- eine Ermittlung eines zweiten an dem Wert zur Verifizierung durchzuführenden Vorgangs, und
wobei der zweite Vorgang eine Realisierungserwartung des Werts ist.

2. Verfahren nach einem der vorhergehenden Ansprüche, wobei der mindestens eine erste Vorgang eine Abzweigung zu einer anderen Maschinenanweisung eines durch den Prozessor auszuführenden Codes ist.

3. Verfahren nach Anspruch 2, wobei die Abzweigung durch die Auswertung eines Vektors von Prädikaten bedingt ist, der mehrere Werte eines oder mehrerer Register von Prädikaten umfasst.

4. Verfahren nach Anspruch 3, wobei der Prädikatsvektor teilweise ausgewertet wird.

5. Verfahren nach einem der vorhergehenden Ansprüche, wobei der mindestens eine erste Vorgang eine Prädikatsberechnung darstellt, wobei die Berechnung umfasst:
- die Bestimmung eines Bits eines Berechnungsregisters,
- den Vergleich des bestimmten Bits mit einem vorbestimmten Wert, und
- das Einschreiben eines Ergebnisses des Vergleichs in das Prädikatsregister.

6. Verfahren nach einem der vorhergehenden Ansprüche, wobei die Maschinenanweisung die Ermittlung von zwei parallel auszuführenden ersten Vorgängen umfasst.

7. Verfahren nach einem der vorhergehenden Ansprüche, wobei die Ausführung der Maschinenanweisungen durch den Prozessor von einem Verarbeitungskettenbaustein verwaltet wird, und wobei die Maschinenanweisungen in der Ausführungsstufe der Verarbeitungskette ausgeführt werden.

8. Verfahren nach Anspruch 7, wobei die Maschinenanweisung in einem Prozessorzyklus ausgeführt wird.

9. Verfahren nach einem der vorhergehenden Ansprüche, wobei die Maschinenanweisungen durch Codewörter dargestellt sind, deren Format vordefiniert ist.

10. Prozessor, umfassend:
- einen Speicher (100), der dazu konfiguriert ist, mindestens eine auszuführende Maschinenanweisung zu speichern, wobei die Maschinenanweisung die Identifikation mindestens eines ersten auszuführenden Vorgangs und ein Bedingungspräfix umfasst, das eine Bedingung darstellt, die zum Ausführen des mindestens einen ersten Vorgangs zu verifizieren ist,
- einen Verwaltungsbaustein, der dazu konfiguriert ist, das Präfix auszuwerten und den mindestens einen ersten Vorgangs ausführen zu lassen oder nicht, der in der Maschinenanweisung ermittelt ist, je nachdem, ob die Bedingung verifiziert wird oder nicht, und
- eine Verarbeitungseinheit (102), die zur Ausführung des mindestens einen ermittelten ersten Vorgangs konfiguriert ist;
- wobei das Verwaltungsmodul (101) dazu konfiguriert ist, einen Wert eines Prädikatsregisters zu verifizieren,
wobei das Bedingungspräfix umfasst:
- eine Ermittlung des Werts des Prädikatregisters, und
- einer Ermittlung eines zweiten an dem Wert zur Verifizierung durchzuführenden Vorgangs, und
wobei der zweite Vorgang eine Realisierungserwartung des Werts ist.

## Claims

1. Method for processing machine instructions by a processor, comprising the following steps:
- receiving (104, 105) a machine instruction (300) to execute, said machine instruction comprising the identification of at least one first operation (302) to execute and a conditional prefix (301) representing a condition to verify to execute said at least one first operation,
- evaluating (108) said prefix, and
- executing or not executing (109) said at least one first operation identified in said machine instruction, according to whether the condition is verified or not;
in which evaluating said prefix comprises verifying a value of a predicate register,
said conditional prefix comprising:
- an identification of said value of said predicate register, and
- an identification of a second operation to perform on said value for said verification, and
in which said second operation is an expectation to realize said value.

2. Method according to any one of the preceding claims in which, said at least one first operation is a branch to another machine instruction of a code to execute by said processor.

3. Method according to claim 2, in which said branch is conditioned by the evaluation of a predicate vector, comprising a plurality of values of one or more predicate registers.

4. Method according to claim 3, in which said predicate vector is evaluated in part.

5. Method according to any one of the preceding claims, in which said at least one first operation represents a predicate calculation, the calculation comprising:
- the determination of a bit of a calculation register,
- the comparison of said determined bit with a predetermined value, and
- the writing of a result of said comparison in a predicate register.

6. Method according to any one of the preceding claims, in which said machine instruction comprises the identification of two first operations to execute in parallel.

7. Method according to any one of the preceding claims, in which the execution of machine instructions by the processor is managed by a processing chain module and in which said machine instructions are executed in the execution stage of said processing chain.

8. Method according to claim 7, in which each machine instruction is executed in a processor cycle.

9. Method according to any one of the preceding claims, in which said machine instructions are represented by code words whose format is predefined.

10. Processor comprising:
- a memory (100) configured to store at least one machine instruction to execute, said machine instruction comprising the identification of at least one first operation to execute and a conditional prefix representing a condition to verify to execute said at least one first operation,
- a management module (101) configured to evaluate said prefix and to have executed or not said at least one first operation identified in said machine instruction, according to whether said condition is verified or not, and
- a processing unit (102) configured for the execution of said at least one first operation identified,
in which the management module (101) is configured to verify a value of a predicate register,
said conditional prefix comprising:
- an identification of said value of said predicate register, and
- an identification of a second operation to perform on said value for said verification, and
in which said second operation is an expectation to realize said value.
